# EUROPÄISCHE PATENTANMELDUNG

(11) **EP 3 395 137 A1**
(43) Veröffentlichungstag der Anmeldung: **31.10.2018**
(21) Anmeldenummer: 18401035.3
(22) Anmeldetag: 11.04.2018
(51) Int. Cl.: A01B 69/00, A01B 79/00

(54) **VERFAHREN ZUM BETRIEB EINES LANDWIRTSCHAFTLICHEN ARBEITSGERÄTS UND LANDWIRTSCHAFTLICHES GERÄT**

(30) Priorität: 24.04.2017 DE 102017108624
(71) Anmelder: Amazonen-Werke H. Dreyer GmbH & Co. KG, 49205 Hasbergen (DE)
(72) Erfinder: Kötter, Heiner, 49086 Osnabrück (DE); Sia, Tim-Randy, 49179 Ostercappeln (DE); Konermann, Thomas, 49477 Ibbenbüren (DE); Heer, Jochen, 49074 Osnabrück (DE); Bergmann, Cord, 49082 Osnabrück (DE); Bremer, Jürgen, 49479 Ibbenbüren (DE)

(57) **Zusammenfassung**

Verfahren zum Betrieb eines einen Betriebsmodus aufweisenden landwirtschaftlichen Arbeitsgeräts, insbesondere eines Bodenbearbeitungsgeräts, mit einem Rahmen, mit mehreren an dem Rahmen angeordneten Arbeitswerkzeugen, mit zumindest einer Erfassungseinrichtung zur Erfassung von Betriebs- und/oder Umgebungsdaten, mit einer Steuereinheit, wobei das Verfahren die Einhaltung des Betriebsmodus überwacht. Um ein Verfahren zum Betrieb eines landwirtschaftlichen Geräts bereitzustellen, welches die geschilderten Nachteile überwindet und einen auf wechselnde Betriebs- und/oder Umgebungsbedingungen optimierten Betrieb des landwirtschaftlichen Arbeitsgeräts ermöglicht, ist vorgesehen, dass das Arbeitsgerät in verschiedenen einstellbaren Betriebsmodi betrieben werden kann und die Einhaltung eines eingestellten Betriebsmodus des Arbeitsgeräts durch eine Steuereinheit überwacht wird.

## Beschreibung

Die Erfindung betrifft ein Verfahren zum Betrieb eines landwirtschaftlichen Arbeitsgeräts gemäß dem Oberbegriff des Patentanspruches 1 sowie ein landwirtschaftliches Arbeitsgerät nach dem Oberbegriff des Patentanspruchs 7.

Ein ähnliches Verfahren zum Betrieb eines ähnlichen, als Sämaschine ausgebildeten, landwirtschaftlichen Arbeitsgeräts ist in der DE 10 2004 048 759 A1 beschrieben. Dort ist vorgesehen, die Ablagetiefe von ausgebrachtem Saatgut zu bestimmen und durch Nachführung der Arbeitswerkzeuge an eine zuvor festgelegte Soll-Ablagetiefe anzupassen. Insbesondere soll das offenbarte Verfahren ein Ausgleichen einer durch Verschleiß der Arbeitswerkzeuge bedingten Veränderung der Ablagetiefe ermöglichen. Dazu werden mithilfe zumindest einer Erfassungseinrichtung in Referenz zu dem Arbeitsgerät der Abstand zur Oberfläche des Erdbodens und der Abstand zum Boden der durch die Arbeitswerkzeuge erzeugten Saatfurche ermittelt. Nachteilig dabei ist, dass bei unebenem Erdboden und/oder unebenen bzw. teilweise verschütteten Furchen die Bestimmung dieser Abstände ungenau sein kann. Zudem ist fraglich, ob mit den bevorzugt als Erfassungseinrichtungen eingesetzten Tastelementen eine Bestimmungsgenauigkeit in der Größenordnung des Verschleißes der Arbeitswerkzeuge erreichbar ist. Das hierin offenbarte Verfahren ist lediglich auf die Einhaltung der Ablagetiefe beschränkt.

Ein weiteres ähnliches Arbeitsgerät ist in der DE 10 2014 009 090 A1 offenbart. Hierin sind ebenso ein Bestimmen der Arbeitstiefe von Arbeitswerkzeugen sowie deren Nachführung entsprechend einer festgelegten Soll-Arbeitstiefe vorgesehen. Zusätzlich werden weitere mögliche Regelgrößen angegeben, welche zur Einhaltung eines gewünschten, festgelegten Arbeitsergebnisses herangezogen werden können. Nachteilig dabei ist, dass das Verfahren in jeder Ausführungsform bzw. bei Nutzung jeder der offenbarten Regelgrößen lediglich darauf ausgelegt ist, das Arbeitsergebnis, beispielsweise in Form einer konstanten Arbeitstiefe, zu optimieren. Es ist also nur vorgesehen, das landwirtschaftliche Arbeitsgerät in einem das Arbeitsergebnis optimierenden Betriebsmodus zu betreiben.

Die Aufgabe der vorliegenden Erfindung also besteht darin, ein Verfahren zum Betrieb eines landwirtschaftlichen Geräts bereitzustellen, welches die geschilderten Nachteile überwindet und einen auf wechselnde Betriebs- und/oder Umgebungsbedingungen optimierten Betrieb des landwirtschaftlichen Arbeitsgeräts ermöglicht.

Diese Aufgabe wird erfindungsgemäß durch die kennzeichnenden Merkmale der unabhängigen Ansprüche 1 und 7 gelöst.

Landwirtschaftliche Arbeitsgeräte im Sinne der vorliegenden Erfindung sollen alle sein, deren Arbeitswerkzeuge im Eingriff mit dem Erdboden stehen. Darunter fallen insbesondere Bodenbearbeitungsgeräte oder Sämaschinen. In einfacher Weise lässt sich die vorliegende Erfindung aber auch auf alle Arbeitsgeräte übertragen, die zur Bearbeitung von landwirtschaftlichen Nutzflächen vorgesehen sind und deren Arbeitswerkzeuge einem Verschleiß unterliegen.

In vorteilhafter Weise ist vorgesehen, dass das landwirtschaftliche Arbeitsgerät in verschiedenen einstellbaren Betriebsmodi betrieben werden kann. Dabei soll der Begriff "einstellbar" die Möglichkeit einschließen, dass durch einen Bediener ein Betriebsmodus aus einer Mehrzahl voreingestellter Betriebsmodi auswählbar ist. Jedem einstellbaren Betriebsmodus liegt eine betriebsmodusspezifische Kombination und/oder Gewichtung von Betriebsparametern zugrunde.

In einem ersten Betriebsmodus soll der Betrieb des landwirtschaftlichen Arbeitsgeräts hinsichtlich der Qualität des Arbeitsergebnisses optimiert sein. In diesem ersten Betriebsmodus wird eine aktuelle Arbeitsaufgabe möglichst exakt erledigt.

In einem zweiten Betriebsmodus soll der Betrieb des landwirtschaftlichen Arbeitsgeräts hinsichtlich der Flächenleistung optimiert sein. In diesem zweiten Betriebsmodus wird eine aktuelle Arbeitsaufgabe möglichst schnell erledigt.

In einem dritten Betriebsmodus soll der Betrieb des landwirtschaftlichen Arbeitsgeräts hinsichtlich des Kraftstoffbedarfs optimiert sein. In diesem dritten Betriebsmodus wird eine aktuelle Arbeitsaufgabe möglichst ökologisch verträglich erledigt.

In einem vierten Betriebsmodus soll der Betrieb des landwirtschaftlichen Arbeitsgeräts möglichst ausgewogen sein und dabei zumindest die Qualität des Arbeitsergebnisses, die Flächenleistung und den Kraftstoffbedarf geeignet, vorzugsweise gleichermaßen, berücksichtigen. In diesem vierten Betriebsmodus wird eine aktuelle Arbeitsaufgabe möglichst wirtschaftlich erledigt.

Zur Bestimmung der Wirtschaftlichkeit des Betriebs des landwirtschaftlichen Arbeitsgeräts sind alle Kostenfaktoren zu kalkulieren. Dazu gehören zumindest die erreichte Qualität des Arbeitsergebnisses, die zum Erreichen dieses Ergebnisses verstrichene Zeit und die aufgewendeten Mittel, beispielsweise in Form von Kraftstoff oder Verschleiß.

Weiterhin schließt der Begriff "einstellbar" ein, dass die beispielhaft genannten Betriebsmodi, beispielsweise durch einen Bediener, an aktuelle Erfordernisse anpassbar sind. Dazu kann beispielsweise ein Bediener die betriebsmodusspezifische Kombination und/oder Gewichtung von Betriebsparametern verändern.

Es soll ferner eingeschlossen sein, dass weitere Betriebsmodi durch einen Bediener festgelegt werden können.

Während des Betriebs des landwirtschaftlichen Arbeitsgeräts in einem, beispielsweise durch den Bediener, ausgewählten Betriebsmodus, wird die Einhaltung des ausgewählten Betriebsmodus überwacht. Durch diese Überwachung kann eine Nicht-Einhaltung des aktuell ausgewählten Betriebsmodus festgestellt werden.

Die Überwachung schließt zudem die Möglichkeit ein, dass die Einhaltung des aktuell ausgewählten Betriebsmodus sichergestellt werden kann. Dazu ist die Steuereinheit des Arbeitsgeräts in geeigneter Weise ausgeführt, die Einhaltung des aktuell ausgewählten Betriebsmodus zu regeln.

Damit die Einhaltung des aktuell ausgewählten Betriebsmodus überwacht werden kann, ist vorgesehen, dass während des Betriebs des Arbeitsgeräts mittels der zumindest einer Erfassungseinrichtung Betriebs- und/oder Umgebungsdaten des Arbeitsgeräts erfasst und durch die Steuereinheit ausgewertet werden. Die erfassten Betriebs- und/oder Umgebungsdaten umfassen zumindest den Verschleiß der Arbeitswerkzeuge, die für den Betrieb des Arbeitsgeräts notwendige Zugkraft und die momentane Vortriebsgeschwindigkeit des Arbeitsgeräts. Zusätzlich ist es vorteilhaft, den momentanen Kraftstoffbedarf zu erfassen.

In dem erfindungsgemäßen Verfahren sind die Betriebsmodi und/oder deren betriebsmodusspezifische Betriebsparameter als Regelgrößen zu verstehen, deren Einhaltung überwacht wird. Jeder einstellbare Betriebsmodus umfasst eine betriebsmodusspezifische Kombination und/oder Gewichtung von Betriebsparametern. Als betriebsmodusspezifische Betriebsparameter können mittels der zumindest einen Erfassungseinrichtung erfassbare Betriebs- und/oder Umgebungsdaten und/oder aus den mittels der zumindest einen Erfassungseinrichtung erfassten Betriebs- und/oder Umgebungsdaten ableitbare Parameter dienen.

Insbesondere bieten sich der Verschleiß der Arbeitswerkzeuge, die für den Betrieb des Arbeitsgeräts notwendige Zugkraft, die momentane Vortriebsgeschwindigkeit des Arbeitsgeräts sowie der Kraftstoffbedarf als geeignete betriebsmodusspezifische Betriebsparameter an.

Die tatsächlich erfassten Betriebs- und/oder Umgebungsdaten dienen in dem erfindungsgemäßen Verfahren als Störgrößen, anhand derer die Regelgrößen durch die Steuereinheit geregelt werden.

Es wird ein Vorteil dadurch erreicht, dass die Einhaltung des eingestellten Betriebsmodus des Arbeitsgeräts unter Berücksichtigung der erfassen Betriebs- und/oder Umgebungsdaten des Arbeitsgeräts durch die Steuereinheit überwacht wird. Durch diese Maßnahme wird sichergestellt, dass die Einhaltung des aktuellen ausgewählten Betriebsmodus auf aktuellen, den Betrieb des Arbeitsgerätes betreffenden Daten basiert. Die jedem Betriebsmodus spezifisch zugrunde liegenden Betriebsparameter werden so mit den aktuell gemessenen Störgrößen verglichen. Dadurch kann die Überwachung in Echtzeit realisiert und optimal auf aktuelle Gegebenheiten angepasst werden.

Ein weiterer Vorteil wird dadurch erreicht, dass der Steuereinheit eine Speichereinheit zugeordnet ist und durch die Steuereinheit aus der Speichereinheit Informationen zu den verschiedenen Betriebsmodi abgerufen werden können und die Informationen zu den verschiedenen Betriebsmodi zumindest betriebsmodusspezifische Betriebsparameter des Arbeitsgeräts umfassen. Durch diese Maßnahme sind die betriebsmodusspezifischen Betriebsparameter des Arbeitsgeräts dauerhaft hinterlegt und müssen nicht bei jedem Betrieb des Arbeitsgeräts eingegeben werden. In einfacher Weise kann somit durch die Steuereinheit ein Abgleich zwischen den mittels der zumindest einen Erfassungseinrichtung erfassten Betriebs- und/oder Umgebungsdaten und den in der Speichereinheit hinterlegten Informationen zu den verschiedenen Betriebsmodi erfolgen.

Zudem ist es möglich, dass die Steuereinheit die während des Betriebs des Arbeitsgeräts erfassten Betriebs- und/oder Umgebungsdaten unabhängig von dem aktuell ausgewählten Betriebsmodus mit allen in der Speichereinheit hinterlegten Betriebsparametern bzw. mit allen hinterlegten Betriebsmodi vergleicht. Somit kann neben der Überwachung der Einhaltung des aktuell ausgewählten Betriebsmodus auch geprüft werden, ob basierend auf den erfassten Betriebs- und/oder Umgebungsdaten ein hinterlegter, aktuell nicht ausgewählter Betriebsmodus zum Betrieb des Arbeitsgeräts geeignet ist.

In der Speichereinheit können alternativ oder zusätzlich weitere Informationen hinterlegt sein. Diese weiteren Informationen können arbeitsgerätespezifische Informationen, beispielsweise eine Arbeitsbreite, umfassen. Die weiteren Informationen können auch Betriebs- und/oder Umgebungsdaten aus vorangegangenen Arbeitsvorgängen sein. Hierzu zählen beispielsweise hinterlegte Daten über die Beschaffenheit des Erdbodens und/oder gespeicherte und/oder ermittelte Routenplanungsdaten.

Durch die Steuereinheit können aus den in der Speichereinheit hinterlegten Informationen und/oder aus den durch die zumindest eine Erfassungseinrichtung erfassten Betriebs- und/oder Umgebungsdaten Parameter abgeleitet und in das erfindungsgemäße Verfahren einbezogen werden.

Ebenso kann vorgesehen sein, dass durch die Steuereinheit abgeleitete Parameter und/oder mittels der zumindest einen Erfassungsvorrichtung erfasste Betriebs- und/oder Umgebungsdaten in der Speichereinheit abgelegt werden können.

Beispielsweise ist bei hinterlegter Arbeitsbreite des landwirtschaftlichen Arbeitsgeräts und einer erfassten Vortriebsgeschwindigkeit des Arbeitsgeräts die während des Betriebs erreichte Flächenleistung ableitbar.

Es ist vorgesehen, dass der Steuereinheit eine Anzeige- und/oder Eingabeeinrichtung zugeordnet ist. Es ist vorteilhaft, dass bei festgestellter oder drohender Nicht-Einhaltung des eingestellten Betriebsmodus des Arbeitsgeräts dem Bediener entsprechende Informationen über die Anzeige- und/oder Eingabeeinrichtung angezeigt werden. Somit ist der Bediener des Arbeitsgeräts stets über den Status des Arbeitsgeräts und des Betriebs des Arbeitsgeräts informiert. Der Bediener kann bei Notwendigkeit in den Betrieb des Arbeitsgeräts eingreifen, um diesen zu optimieren oder im Bedarfsfall eine Beschädigung des Arbeitsgeräts zu vermeiden.

Die dem Bediener angezeigte Information kann verschieden ausgeführt sein:
Die dem Bediener angezeigte Information kann ein einen Hinweis darauf enthalten, dass der ausgewählte Betriebsmodus momentan und/oder voraussichtlich zukünftig nicht eingehalten wird.

Die dem Bediener angezeigte Information kann einen Hinweis darauf enthalten, dass zur Einhaltung des aktuell ausgewählten Betriebsmodus momentan und/oder voraussichtlich zukünftig eine Regelung erforderlich ist.

Die dem Bediener angezeigte Information kann einen Hinweis darauf enthalten, dass basierend auf den erfassten Betriebs- und/oder Umgebungsdaten ein anderer hinterlegter, aktuell nicht ausgewählter Betriebsmodus zum Betrieb des Arbeitsgeräts geeignet und/oder empfohlen ist. Dieser andere hinterlegte aktuell nicht ausgewählte Betriebsmodus wird basierend auf den mittels der zumindest einen Erfassungseinrichtung erfassten Betriebs- und/oder Umgebungsdaten als optimal für den Betrieb des Arbeitsgeräts erkannt und ist alternativ zum aktuell ausgewählten Betriebsmodus einstellbar.

Es kann vorgesehen sein, dass auf die dem Bediener über die Anzeige- und/oder Eingabeeinrichtung angezeigte Information eine Reaktion des Bedieners erforderlich ist. Die Reaktion kann beispielsweise eine Bestätigung der Kenntnisnahme der über die Anzeige- und/oder Eingabeeinrichtung angezeigten Information oder eine Eingabe sein, welche den aktuell ausgewählten Betriebsmodus ändert. Die Reaktion des Bedieners erfolgt in Form einer Eingabe über die Anzeige- und/oder Eingabeeinrichtung, welche bevorzugt als berühungsempfindlicher Bildschirm ausgeführt ist.

Es ist vorteilhaft, dass die bei festgestellter und/oder drohender Nicht-Einhaltung des eingestellten Betriebsmodus des Arbeitsgeräts die dem Bediener angezeigten Informationen Hinweise auf den Grund der Nicht-Einhaltung des eingestellten Betriebsmodus, insbesondere eine Empfehlung eines optimalen alternativ einstellbaren Betriebsmodus, umfassen. Dadurch wird dem Bediener beispielsweise für die Auswahl des für den Betrieb des Arbeitsgeräts optimalen Betriebsmodus eine Entscheidungshilfe gegeben. Der Bediener behält somit die Kontrolle über den Betrieb des Arbeitsgeräts und kann beispielsweise entscheiden, ob er beim Betrieb des Arbeitsgeräts der ihm über die Anzeige- und/oder Eingabeeinrichtung angezeigten Information, insbesondere der Empfehlung eines optimalen alternativ einstellbaren Betriebsmodus, folgt oder nicht.

Alternativ oder zusätzlich kann die Möglichkeit vorgesehen sein, dass das erfindungsgemäße Verfahren für den Betrieb des landwirtschaftlichen Arbeitsgeräts basierend auf den erfassten Betriebs- und/oder Umgebungsdaten die Einhaltung des aktuell ausgewählten Betriebsmodus automatisiert regelt.

Ferner kann vorgesehen sein, dass das erfindungsgemäße Verfahren für den Betrieb des landwirtschaftlichen Arbeitsgeräts basierend auf den erfassten Betriebs- und/oder Umgebungsdaten den optimalen Betriebsmodus automatisiert einstellt.

Es ist vorgesehen, dass Eingaben des Bedieners stets automatisiert durch das erfindungsgemäße Verfahren vorgenommene Einstellungen des Arbeitsgeräts übersteuern. Auf diese Weise behält der Bediener zu jeder Zeit die Kontrolle über den Betrieb des Arbeitsgeräts.

Es ist vorteilhaft, dass der Steuereinheit durch den Bediener über die Anzeige- und/oder Eingabeeinrichtung Informationen zugeführt werden können. Durch diese Maßnahme ist die zuvor beschriebene Einflussnahme des Bedieners auf das Verfahren zum Betrieb des landwirtschaftlichen Arbeitsgeräts sichergestellt.

Zur Durchführung des erfindungsgemäßen Verfahrens ist ein landwirtschaftliches Arbeitsgerät, insbesondere Bodenbearbeitungsgerät, vorgesehen, mit einem Rahmen, mit mehreren an dem Rahmen angeordneten Arbeitswerkzeugen, mit zumindest einer Erfassungseinrichtung zur Erfassung von Betriebs- und/oder Umgebungsdaten, mit einer Steuereinheit, welcher ein Anzeige- und/oder Eingabeeinrichtung zugeordnet ist

Es wird ein besonderer Vorteil dadurch erreicht, dass das Arbeitsgerät in verschiedenen Betriebsmodi betrieben werden kann, wobei ein Bediener über die Anzeige- und/oder Eingabeeinrichtung einen Betriebsmodus auswählen kann und dem Bediener Informationen zu dem aktuell ausgewählten Betriebsmodus angezeigt werden können. Durch diese Maßnahme ist einem Bediener in besonders übersichtlicher und komfortabler Weise die Einstellung des Betriebsmodus des Arbeitsgeräts möglich. Zusätzlich ist der Bediener des Arbeitsgeräts stets über den Status des Arbeitsgeräts und des Betriebs des Arbeitsgeräts informiert. Der Bediener kann bei Notwendigkeit in den Betrieb des Arbeitsgeräts eingreifen um diesen zu optimieren oder im Bedarfsfall eine Beschädigung des Arbeitsgeräts zu vermeiden.

Es ist vorteilhaft, dass der Steuereinheit eine Speichereinheit zugeordnet ist und in der Speichereinheit Informationen zu den Betriebsmodi hinterlegt sind und die Informationen zu den Betriebsmodi zumindest betriebsmodusspezifische Betriebsparameter des Arbeitsgeräts umfassen. Durch diese Maßnahme sind die betriebsmodusspezifischen Betriebsparameter des Arbeitsgeräts dauerhaft in der Speichereinheit hinterlegt und müssen nicht bei jedem Betrieb des Arbeitsgeräts eingegeben werden. In einfacher Weise kann somit durch die Steuereinheit ein Abgleich zwischen den mittels der zumindest einen Erfassungseinrichtung erfassten Betriebs- und/oder Umgebungsdaten und den in der Speichereinheit hinterlegten Informationen zu den verschiedenen Betriebsmodi erfolgen.

Zudem ist es möglich, dass die Steuereinheit die während des Betriebs des Arbeitsgeräts erfassten Betriebs- und/oder Umgebungsdaten unabhängig von dem aktuell ausgewählten Betriebsmodus mit allen in der Speichereinheit hinterlegten Betriebsparametern bzw. mit allen hinterlegten Betriebsmodi vergleicht. Somit kann neben der Überwachung der Einhaltung des aktuell ausgewählten Betriebsmodus auch geprüft werden, ob basierend auf den erfassten Betriebs- und/oder Umgebungsdaten ein hinterlegter, aktuell nicht ausgewählter Betriebsmodus zum Betrieb des Arbeitsgeräts geeignet ist.

Es vorgesehen, dass der Steuereinheit zumindest eine Kommunikationseinrichtung zugeordnet ist und während des Betriebs des Arbeitsgeräts mittels der zumindest einen Erfassungseinrichtung Betriebs- und/oder Umgebungsdaten des Arbeitsgeräts erfasst werden, welche durch die Steuereinheit ausgewertet werden.

Es ist daher von Vorteil, dass die Übermittlung der von der zumindest einen Erfassungseinrichtung erfassten Betriebs- und/oder Umgebungsdaten an die Steuereinheit und/oder die der Steuereinheit zugeordneten Speichereinheit, insbesondere drahtlos, über die der Steuereinheit zugeordneten zumindest einen Kommunikationseinrichtung erfolgt. Dadurch ist in einfacher Weise eine Kommunikation zwischen der zumindest einen Erfassungseinrichtung und der Steuereinheit sichergestellt, damit mittels der zumindest einen Erfassungseinrichtung erfassten Betriebs- und/oder Umgebungsdaten zur Auswertung der Steuereinheit zugeführt werden können.

Ist eine drahtlose Kommunikation zwischen der zumindest einen Erfassungsvorrichtung und der Steuereinheit vorgesehen, entfällt eine aufwändige Verkabelung der zumindest einen Erfassungseinrichtung. Zudem kann in diesem Fall die zumindest eine Erfassungseinrichtung an beliebiger Stelle positioniert und/oder bei Bedarf versetzt werden.

Es ist weiterhin vorteilhaft, dass die mittels der zumindest einen Erfassungseinrichtung erfassten Betriebs- und/oder Umgebungsdaten zumindest den Verschleiß der Arbeitswerkzeuge, die für den Betrieb des Arbeitsgeräts notwendige Zugkraft und die momentane Vortriebsgeschwindigkeit des Arbeitsgeräts umfassen. Die Erfassung dieser beschriebenen Betriebs- und/oder Umgebungsdaten ermöglicht in einfacher Weise den zumindest Betrieb des Arbeitsgeräts in den zuvor genannten vier Betriebsmodi:
In dem ersten Betriebsmodus soll der Betrieb des landwirtschaftlichen Arbeitsgeräts hinsichtlich der Qualität des Arbeitsergebnisses optimiert sein. In diesem ersten Betriebsmodus wird eine aktuelle Arbeitsaufgabe möglichst exakt erledigt. Es ist beispielsweise möglich, Informationen über die Einhaltung der Qualität des Arbeitsergebnisses, beispielsweise in Form einer konstanten Arbeitstiefe, aus einer zumindest geeigneten Kombination aus Zugkraftbedarf und Vortriebsgeschwindigkeit abzuleiten.

In dem zweiten Betriebsmodus soll der Betrieb des landwirtschaftlichen Arbeitsgeräts hinsichtlich der Flächenleistung optimiert sein. In diesem zweiten Betriebsmodus wird eine aktuelle Arbeitsaufgabe möglichst schnell erledigt. Es ist beispielsweise möglich, Informationen über die Flächenleistung aus zumindest einer geeigneten Kombination der Vortriebsgeschwindigkeit und einer hinterlegten Arbeitsbreite des Arbeitsgeräts abzuleiten. Insbesondere kann vorgesehen sein, dass der Bediener arbeitsgerätespezifische Informationen, wie beispielsweise die Arbeitsbreite, über die Anzeige- und/oder Eingabeeinrichtung einzugeben und somit dem erfindungsgemäßen Verfahren zuzuführen. Es kann überdies vorgesehen sein, dass der Bediener mittels entsprechender Hinweise über die Anzeige- und/oder Eingabe aufgefordert wird, fehlende, insbesondere arbeitsgerätespezifische, Informationen einzugeben. Bei Arbeitsgeräten mit mehreren Teilbreiten oder variabler Arbeitsbreite kann die Genauigkeit der Bestimmung der Flächenleistung dadurch erhöht werden, in dem mittels geeigneter Erfassungseinrichtungen erfasst wird, welche Teilbreiten und/oder welche Arbeitsbreite tatsächlich aktiv sind/ist.

In dem dritten Betriebsmodus soll der Betrieb des landwirtschaftlichen Arbeitsgeräts hinsichtlich des Kraftstoffbedarfs optimiert sein. In diesem dritten Betriebsmodus wird eine aktuelle Arbeitsaufgabe möglichst ökologisch verträglich erledigt. Es ist beispielsweise möglich, Informationen über den Kraftstoffverbrauch aus einer geeigneten Kombination aus zumindest Zugkraftbedarf und Vortriebsgeschwindigkeit abzuleiten.

In dem vierten Betriebsmodus soll der Betrieb des landwirtschaftlichen Arbeitsgeräts möglichst ausgewogen sein und dabei zumindest die Qualität des Arbeitsergebnisses, die Flächenleistung und den Kraftstoffbedarf geeignet, vorzugsweise gleichermaßen, berücksichtigen. In diesem vierten Betriebsmodus wird eine aktuelle Arbeitsaufgabe möglichst wirtschaftlich erledigt. Es ist dabei möglich, dass der Bediener die Gewichtung der zugrundeliegenden Betriebsparameter verändert.

Der Verschleiß der Arbeitswerkzeuge des Arbeitsgeräts kann beispielsweise in an sich bekannter Weise mittels eines Verschleißsensors ermittelt werden, welcher eine abriebbedingte Veränderung eines elektrischen Widerstandes misst.

Durch die Erfassung des Verschleißes der Arbeitswerkzeuge ist der Bediener stets über den Zustand des Arbeitsgeräts informiert. Er kann beispielsweise gewarnt werden, wenn der Betrieb des Arbeitsgeräts in dem aktuell ausgewählten Betriebsmodus zu einem erhöhten Verschleiß der Arbeitswerkzeuge und/oder anderer Bauteile des Arbeitsgeräts führt. Zudem kann die Notwendigkeit von Wartungsarbeiten erkannt werden. Durch eine frühzeitige Erkennung von notwendigen Wartungsarbeiten können diese gut eingeplant werden, wodurch der Betrieb des Arbeitsgeräts erheblich wirtschaftlicher ist. Auch die Gefahr eines unvorhergesehenen Ausfalls des Arbeitsgeräts sinkt erheblich.

Eine genauere Auswertung und/oder Überwachung der Betriebsmodi wird durch zusätzlich mittels der zumindest einen Erfassungsvorrichtung erfasste und/oder in der Speichereinheit hinterlegte und/oder hinterlegbare Informationen erreicht.

Insbesondere ist denkbar, dass mittels geeigneter Erfassungsvorrichtungen die Beschaffenheit des Erdbodens erfasst wird. Ein unterschiedlicher Feuchtigkeitsgrad des Erdbodens beispielsweise beeinflusst den Zugkraftbedarf erheblich.

Durch eine Veränderung der Kombination und/oder Gewichtung der den Betriebsmodi zugrundeliegenden Betriebsparameter können Mischformen der beispielhaft beschriebenen Betriebsmodi erreicht werden.

Es kann vorgesehen sein, dass in der Speichereinheit die Kosten beispielsweise für Kraftstoff, Arbeitszeit und/oder Verschleiß hinterlegt sind. Somit können durch das erfindungsgemäße Verfahren die momentanen Kosten und/oder die Gesamtkosten des Betriebs des Arbeitsgeräts ermittelt werden. Dies kann in Abhängigkeit von den mittels der zumindest einen Erfassungseinrichtung erfassten Betriebs- und/oder Umgebungsdaten erfolgen. Somit erlangt ein Bediener stets eine aktuelle Übersicht über die Kosten des Betriebs des Arbeitsgeräts und kann diese Kosten durch Veränderung des Betriebsmodus minimieren.

Weitere Einzelheiten der Erfindung sind der Beispielsbeschreibung und den Zeichnungen zu entnehmen. Die Zeichnungen zeigen
- Fig.1: ein als Bodenbearbeitungsgerät ausgebildetes, an eine Zugmaschine angebautes landwirtschaftliches Arbeitsgerät in seitlicher Ansicht,
- Fig.2: eine schematische Übersicht über Betriebsmodi des landwirtschaftlichen Arbeitsgeräts und
- Fig.3: eine schematische Darstellung des erfindungsgemäßen Verfahrens.

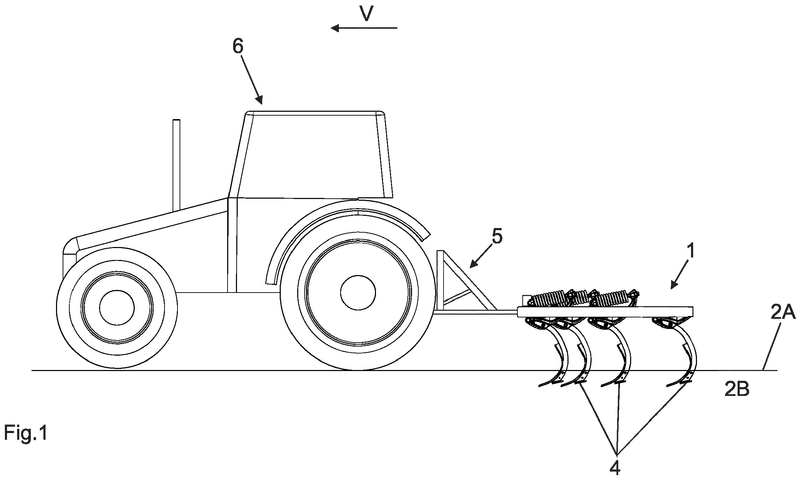

Landwirtschaftliche Arbeitsgeräte 1 sind zur Bearbeitung von landwirtschaftlichen Nutzflächen 2A vorgesehen. Im gewählten Ausführungsbeispiel der Fig. 1 ist das Arbeitsgerät 1 als Bodenbearbeitungsgerät ausgeführt. Das Arbeitsgerät 1 weist einen Rahmen 3 auf. An dem Rahmen 3 ist eine Vielzahl von Arbeitswerkzeugen 4 angeordnet, welche zum Eingriff in den Erdboden 2B vorgesehen sind. Mittels einer Kupplungsvorrichtung 5 ist das Arbeitsgerät 1 mit einer Zugmaschine 6 verbunden.

Alternativ kann das Arbeitsgerät 1 als Sämaschine ausgebildet sein. Das erfindungsgemäße Verfahren kann mit sämtlichen landwirtschaftlichen Arbeitsgeräten 1 durchgeführt werden, deren Arbeitswerkzeuge 4 Verschleiß unterliegen. Insbesondere betrifft dies alle landwirtschaftlichen Arbeitsgeräte 1, deren Arbeitswerkzeuge 4 zum Eingriff in den Erdboden 2B vorgesehen sind.

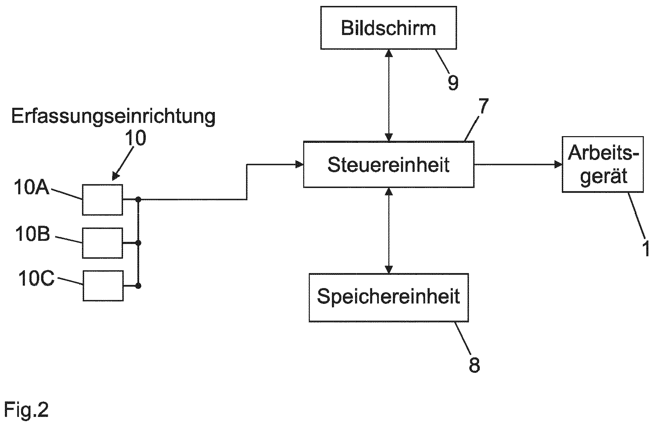

Das Arbeitsgerät 1 weist eine Steuereinheit 7 auf, gezeigt in Fig. 2. Der Steuereinheit 7 ist eine Speichereinheit 8 sowie eine Anzeige- und/oder Eingabeeinrichtung 9 zugeordnet. Die Anzeige- und/oder Eingabeeinrichtung 9 ist im gewählten Ausführungsbeispiel als berührungsempfindlicher Bildschirm ausgeführt. Die Anzeige- und/oder Eingabeeinrichtung 9 ist bevorzugt an der Zugmaschine 6, besonders bevorzugt in der Kabine der Zugmaschine 6, angeordnet. Ferner weist das Arbeitsgerät 1 zumindest eine Erfassungseinrichtung 10 zur Erfassung von Betriebs- und/oder Umgebungsdaten des Arbeitsgeräts 1 auf. Die von der zumindest einen Erfassungseinrichtung 10 erfassten Betriebs- und/oder Umgebungsdaten werden mittels geeigneter Kommunikationseinrichtungen an die Steuereinheit 7 übermittelt. Bevorzugt sind dabei Kommunikationseinrichtungen zur drahtlosen Übermittlung der erfassten Betriebs- und/oder Umgebungsdaten.

Dabei wird mittels zumindest einer ersten Erfassungseinrichtung 10A der Verschleiß der Arbeitswerkzeuge 4 ermittelt. Dazu ist die zumindest eine erste Erfassungseinrichtung 10A im Bereich der Arbeitswerkzeuge 4 angeordnet.

Alternativ kann jedem Arbeitswerkzeug 4 eine Erfassungsvorrichtung 10A zur Erfassung des Verschleißes des jeweiligen Arbeitswerkzeuges 4 zugeordnet sein.

In bevorzugter Weise ist die zumindest eine erste Erfassungseinrichtung 10A als Verschleißsensor ausgeführt. Ein Verschleißsensor ist in der Oberfläche eines Arbeitswerkzeuges 4 eingesetzt und wird bei Eingriff des Arbeitswerkzeugs 4 in den Erdboden 2B gemeinsam mit dem Arbeitswerkzeug 4 abgenutzt. Durch diese Veränderung der räumlichen Ausdehnung des Verschleißsensors ergibt sich eine Veränderung des elektrischen Wiederstands des Verschleißsensors, welche messbar ist und Rückschlüsse auf den Verschleiß des Arbeitswerkzeugs 4 zulässt.

Mittels einer zumindest zweiten Erfassungseinrichtung 10B wird die momentane für den Betrieb des Arbeitsgeräts 1 notwendige Zugkraft erfasst. Die zumindest eine zweite Erfassungseinrichtung 10B zur Erfassung des Zugkraftbedarfs ist beispielsweise als Dehnungsmesssensor ausgeführt und im Bereich der Kupplungseinrichtung 5 und/oder der Arbeitswerkzeuge 4 angeordnet.

Mittels einer dritten Erfassungseinrichtung 10C wird die momentane Vortriebsgeschwindigkeit des Arbeitsgeräts 1 erfasst. Die dritte Erfassungseinrichtung 10C zur Erfassung der momentanen Vortriebsgeschwindigkeit des Arbeitsgeräts 1 ist vorzugsweise als satellitengestützte Positionserfassungseinrichtung ausgeführt.

In alternativer Ausführungsform kann die dritte Erfassungseinrichtung 10C zur Erfassung der momentanen Vortriebsgeschwindigkeit des Arbeitsgeräts 1 auch als Radarsensor oder Ultraschallsensor ausgeführt sein. Ebenso ist es möglich, die momentane Vortriebsgeschwindigkeit des Arbeitsgeräts 1 von entsprechenden Erfassungseinrichtungen der Zugmaschine 6 abzugreifen.

In vorteilhafter Weise wird mittels einer vierten Erfassungseinrichtung der momentane Kraftstoffbedarf der Zugmaschine 6 erfasst. Die vierte Erfassungseinrichtung zur Erfassung des momentanen Kraftstoffbedarfs der Zugmaschine 6 ist bevorzugt an der Zugmaschine angeordnet, besonders bevorzugt als Teil der technischen Ausstattung der Zugmaschine 6.

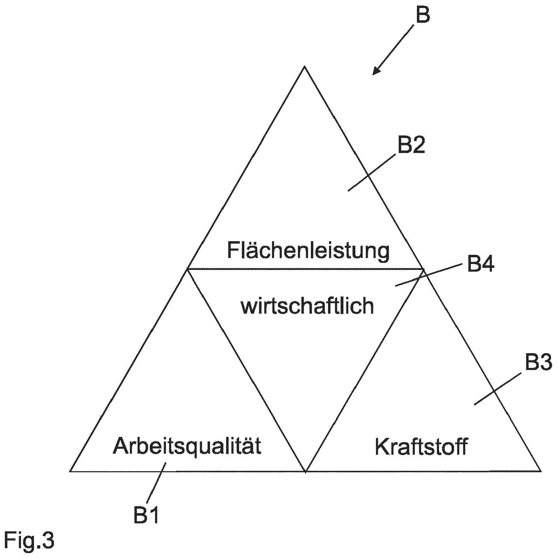

Das Arbeitsgerät 1 wird von der Zugmaschine 6 entlang einer Vortriebsrichtung V über die Nutzfläche 2 bewegt. Zur Bearbeitung einer Nutzfläche 2A weist das Arbeitsgerät 1 mehrere einstellbare Betriebsmodi B auf. Im gewählten Ausführungsbeispiel der Fig. 3 sind vier Betriebsmodi B1,B2,B3,B4 vorgesehen.

Jeder einstellbare Betriebsmodus B umfasst eine betriebsmodusspezifische Kombination und/oder Gewichtung von Betriebsparametern. Als betriebsmodusspezifische Betriebsparameter können mittels der zumindest einen Erfassungseinrichtung 10 erfassbare Betriebs- und/oder Umgebungsdaten und/oder aus den mittels der zumindest einen Erfassungseinrichtung 10 erfassten Betriebs- und/oder Umgebungsdaten ableitbare Parameter dienen.

Die den Betriebsmodi B zugrunde liegenden Betriebsparameter des Arbeitsgeräts 1 sind in der Speichereinheit 8 hinterlegt. Zusätzlich ist vorgesehen, dass mittels der zumindest einen Erfassungseinrichtung 10 erfasste Betriebs- und/oder Umgebungsdaten des Arbeitsgeräts 1 in der Speichereinheit 8 hinterlegt werden können. Zusätzlich sind Eingaben, beispielsweise arbeitsgerätespezifischer Informationen durch den Bediener mittels der Anzeige- und/oder Eingabeeinrichtung 9 vorgesehen.

Bevorzugt ist vorgesehen, dass die Steuereinheit 7 den Bediener mittels der Anzeige- und/oder Eingabevorrichtung 9 zur Eingabe benötigter und/oder zusätzlicher, beispielsweise arbeitsgerätespezifischer, Informationen auffordert. Eine besonders bevorzugte arbeitsgerätespezifische Information ist die Arbeitsbreite des Arbeitsgeräts 1.

In dem ersten Betriebsmodus B1 soll der Betrieb des landwirtschaftlichen Arbeitsgeräts 1 hinsichtlich der Qualität des Arbeitsergebnisses optimiert sein. In diesem ersten Betriebsmodus B1 wird eine aktuelle Arbeitsaufgabe möglichst exakt erledigt. Es ist beispielsweise möglich, Informationen über die Einhaltung der Qualität des Arbeitsergebnisses, beispielsweise in Form einer konstanten Arbeitstiefe, aus einer zumindest geeigneten Kombination aus Zugkraftbedarf und Vortriebsgeschwindigkeit abzuleiten.

In dem zweiten Betriebsmodus B2 soll der Betrieb des landwirtschaftlichen Arbeitsgeräts 1 hinsichtlich der Flächenleistung optimiert sein. In diesem zweiten Betriebsmodus B2 wird eine aktuelle Arbeitsaufgabe möglichst schnell erledigt. Es ist beispielsweise möglich, Informationen über die Flächenleistung aus zumindest einer geeigneten Kombination der Vortriebsgeschwindigkeit und einer hinterlegten Arbeitsbreite des Arbeitsgeräts 1 abzuleiten.

Es ist vorgesehen, dass der Bediener arbeitsgerätespezifische Informationen, wie beispielsweise die Arbeitsbreite, über die Anzeige- und/oder Eingabeeinrichtung 9 eingeben und somit dem erfindungsgemäßen Verfahren zuführen kann. Es kann überdies vorgesehen sein, dass der Bediener mittels entsprechender Hinweise über die Anzeige- und/oder Eingabeeinrichtung 9 aufgefordert wird, fehlende, insbesondere arbeitsgerätespezifische, Informationen einzugeben. Bei Arbeitsgeräten 9 mit mehreren Teilbreiten oder variabler Arbeitsbreite kann die Genauigkeit der Bestimmung der Flächenleistung dadurch erhöht werden, in dem mittels geeigneter Erfassungseinrichtungen erfasst wird, welche Teilbreiten und/oder welche Arbeitsbreite tatsächlich aktiv sind/ist.

In dem dritten Betriebsmodus B3 soll der Betrieb des landwirtschaftlichen Arbeitsgeräts 1 hinsichtlich des Kraftstoffbedarfs optimiert sein. In diesem dritten Betriebsmodus B3 wird eine aktuelle Arbeitsaufgabe möglichst ökologisch verträglich erledigt. Es ist beispielsweise möglich, Informationen über den Kraftstoffverbrauch aus einer geeigneten Kombination aus zumindest Zugkraftbedarf und Vortriebsgeschwindigkeit abzuleiten.

Alternativ und/oder zusätzlich ist es möglich, Informationen über den momentanen Kraftstoffverbrauch in der zuvor beschriebenen Weise von der Zugmaschine 6 abzugreifen.

In dem vierten Betriebsmodus B4 soll der Betrieb des landwirtschaftlichen Arbeitsgeräts 1 möglichst ausgewogen sein und dabei zumindest die Qualität des Arbeitsergebnisses, die Flächenleistung und den Kraftstoffbedarf geeignet, vorzugsweise gleichermaßen, berücksichtigen. In diesem vierten Betriebsmodus B4 wird eine aktuelle Arbeitsaufgabe möglichst wirtschaftlich erledigt.

Für alle einstellbaren Betriebsmodi B ist es möglich, dass der Bediener die Gewichtung der zugrundeliegenden Betriebsparameter verändert. Dadurch kann der Bediener die Betriebsmodi B an die aktuellen Erfordernisse und/oder seine Wünsche anpassen. Auf diese Weise lassen sich auch Mischformen der einstellbaren Betriebsmodi B erzeugen, wie es Fig. 3 schematisch verdeutlicht, und/oder neue Betriebsmodi definieren.

Zur Bestimmung der Wirtschaftlichkeit des Betriebs des landwirtschaftlichen Arbeitsgeräts 1 sind alle Kostenfaktoren zu kalkulieren. Dazu gehören zumindest die erreichte Qualität des Arbeitsergebnisses, die zum Erreichen dieses Ergebnisses verstrichene Zeit und die aufgewendeten Mittel, beispielsweise in Form von Kraftstoff oder Verschleiß.

Es ist vorgesehen, dass in der Speichereinheit 8 die Kosten beispielsweise für Kraftstoff, Arbeitszeit und/oder Verschleiß hinterlegt sind. Somit können durch das erfindungsgemäße Verfahren die momentanen Kosten und/oder die Gesamtkosten des Betriebs des Arbeitsgeräts 1 ermittelt werden. Dies kann in Abhängigkeit von den mittels der zumindest einen Erfassungseinrichtung 10 erfassten Betriebs- und/oder Umgebungsdaten erfolgen. Somit erlangt ein Bediener stets eine aktuelle Übersicht über die Kosten des Betriebs des Arbeitsgeräts 1 und kann diese Kosten durch Veränderung des Betriebsmodus minimieren.

Werden durch geeignete Erfassungsvorrichtungen zusätzliche Betriebs- und/oder Umgebungsdaten, beispielsweise die Beschaffenheit und/oder die Feuchtigkeit des Erdbodens 2B ermittelt, können diese in der Speichereinheit 8 hinterlegt und/oder der Steuereinheit 7 zur Auswertung zugeführt werden. Diese zusätzlichen Betriebs- und/oder Umgebungsdaten erhöhen die Genauigkeit des erfindungsgemäßen Verfahrens erheblich.

Zur Durchführung des erfindungsgemäßen Verfahrens wählt der Bediener des landwirtschaftlichen Arbeitsgeräts 1 über die Anzeige- und/oder Eingabeeinrichtung 9 einen der verfügbaren Betriebsmodi B des landwirtschaftlichen Arbeitsgeräts 1 aus. Jedem einstellbaren Betriebsmodus B liegt eine betriebsmodusspezifische Kombination und/oder Gewichtung von Betriebsparametern zugrunde. Als betriebsmodusspezifische Betriebsparameter können mittels der zumindest einen Erfassungseinrichtung 10 erfassbare Betriebs- und/oder Umgebungsdaten und/oder aus den mittels der zumindest einen Erfassungseinrichtung 10 erfassten Betriebs- und/oder Umgebungsdaten ableitbare Parameter dienen.

Bei Betrieb des Arbeitsgeräts 1 in dem aktuell ausgewählten Betriebsmodus B überwacht die Steuereinheit 7 die Einhaltung des aktuell ausgewählten Betriebsmodus B. Dazu werden mithilfe der zumindest einen Erfassungseinrichtung 10 Betriebs- und/oder Umgebungsdaten des Arbeitsgeräts 1 erfasst und über Kommunikationseirichtungen an die Steuereinheit 7 übermittelt. Die Steuereinheit 7 gleicht die erfassten Betriebs- und/oder Umgebungsdaten mit den in der Speichereinheit 8 hinterlegten Betriebsparametern und/oder zusätzlichen Informationen ab.

Aus dem Abgleich der erfassten Betriebs- und/oder Umgebungsdaten mit den in der Speichereinheit 8 hinterlegten Betriebsparametern kann die Steuereinheit 7 eine vorliegende und/oder drohende Nicht-Einhaltung des aktuell ausgewählten Betriebsmodus B feststellen. Eine drohende Nicht-Einhaltung wird dabei durch Extrapolation festgestellt.

Bei einer Nicht-Einhaltung des aktuell ausgewählten Arbeitsmodus B wird dem Bediener über die Anzeige- und/oder Eingabeeinrichtung 9 eine geeignete Information angezeigt. Die dem Bediener angezeigte Information kann verschieden ausgeführt sein:
Die dem Bediener angezeigte Information kann ein einen Hinweis darauf enthalten, dass der ausgewählte Betriebsmodus B momentan und/oder voraussichtlich zukünftig nicht eingehalten wird. Die Information ist somit als reine Warnung zu verstehen, auf welche der Bediener reagieren kann.

Die dem Bediener angezeigte Information kann einen Hinweis darauf enthalten, dass zur Einhaltung des aktuell ausgewählten Betriebsmodus momentan und/oder voraussichtlich zukünftig eine Regelung erforderlich ist. Die Information ist somit als reine Warnung zu verstehen, die andeutet, dass die Steuereinheit 7 derzeit oder zukünftig regelnd in die Einhaltung des aktuell ausgewählten Betriebsmodus B eingreift.

Die dem Bediener angezeigte Information kann einen Hinweis darauf enthalten, dass basierend auf den erfassten Betriebs- und/oder Umgebungsdaten ein anderer hinterlegter, aktuell nicht ausgewählter Betriebsmodus B zum Betrieb des Arbeitsgeräts 1 geeignet und/oder empfohlen ist. Dieser andere hinterlegte aktuell nicht ausgewählte Betriebsmodus B wird basierend auf den mittels der zumindest einen Erfassungseinrichtung 10 erfassten Betriebs- und/oder Umgebungsdaten als optimal für den Betrieb des Arbeitsgeräts 1 erkannt und ist alternativ zum aktuell ausgewählten Betriebsmodus B einstellbar.

Auf die dem Bediener über die Anzeige- und/oder Eingabeeinrichtung 9 angezeigte Information kann eine Reaktion des Bedieners erforderlich sein. Die Reaktion kann beispielsweise eine Bestätigung der Kenntnisnahme der über die Anzeige- und/oder Eingabeeinrichtung 9 angezeigten Information oder eine Eingabe sein, welche den aktuell ausgewählten Betriebsmodus B ändert. Die Reaktion des Bedieners erfolgt in Form einer Eingabe über die Anzeige- und/oder Eingabeeinrichtung 9, welche bevorzugt als berühungsempfindlicher Bildschirm ausgeführt ist.

Bei festgestellter und/oder drohender Nicht-Einhaltung des eingestellten Betriebsmodus B des Arbeitsgeräts 1 kann die dem Bediener angezeigte Information Hinweise auf den Grund der Nicht-Einhaltung des eingestellten Betriebsmodus B, insbesondere eine Empfehlung eines optimalen alternativ einstellbaren Betriebsmodus, B umfasst. Dadurch wird dem Bediener beispielsweise für die Auswahl des für den Betrieb des Arbeitsgeräts 1 optimalen Betriebsmodus B eine Entscheidungshilfe gegeben. Der Bediener behält somit die Kontrolle über den Betrieb des Arbeitsgeräts 1 und kann beispielsweise entscheiden, ob er beim Betrieb des Arbeitsgeräts 1 der ihm über die Anzeige- und/oder Eingabeeinrichtung 9 angezeigten Information, insbesondere der Empfehlung eines optimalen alternativ einstellbaren Betriebsmodus B, folgt oder nicht.

Es ist die Möglichkeit vorgesehen, dass das erfindungsgemäße Verfahren für den Betrieb des landwirtschaftlichen Arbeitsgeräts 1 basierend auf den erfassten Betriebs- und/oder Umgebungsdaten die Einhaltung des aktuell ausgewählten Betriebsmodus B automatisiert regelt.

Ferner kann vorgesehen sein, dass das erfindungsgemäße Verfahren für den Betrieb des landwirtschaftlichen Arbeitsgeräts 1 basierend auf den erfassten Betriebs- und/oder Umgebungsdaten den optimalen Betriebsmodus B automatisiert einstellt. Dabei ist die Auswahl bevorzugt hinsichtlich der Wirtschaftlichkeit des Betriebs optimiert, welche sich durch minimale Gesamtkosten auszeichnet.

Es ist vorgesehen, dass Eingaben des Bedieners stets automatisiert durch das erfindungsgemäße Verfahren vorgenommene Einstellungen des Arbeitsgeräts 1 übersteuern. Auf diese Weise behält der Bediener zu jeder Zeit die Kontrolle über den Betrieb des Arbeitsgeräts 1.

Durch die Erfassung des Verschleißes der Arbeitswerkzeuge 4 ist der Bediener zudem stets über den Zustand des Arbeitsgeräts 1 informiert. Er kann beispielsweise gewarnt werden, wenn der Betrieb des Arbeitsgeräts 1 in dem aktuell ausgewählten Betriebsmodus B zu einem erhöhten Verschleiß der Arbeitswerkzeuge 4 und/oder anderer Bauteile des Arbeitsgeräts 1 führt. Zudem kann die Notwendigkeit von Wartungsarbeiten erkannt werden. Durch eine frühzeitige Erkennung von notwendigen Wartungsarbeiten können diese gut eingeplant werden, wodurch der Betrieb des Arbeitsgeräts 1 erheblich wirtschaftlicher ist. Auch die Gefahr eines unvorhergesehenen Ausfalls des Arbeitsgeräts 1 sinkt erheblich.

In der beschriebenen Weise wird somit ein Verfahren zum Betrieb eines landwirtschaftlichen Arbeitsgeräts 1 geschaffen, welches einen auf wechselnde Betriebs- und/oder Umgebungsbedingungen optimierten Betrieb des Arbeitsgeräts 1 erlaubt. Die Parameter der Optimierung sind dabei durch den Bediener einstellbar und/oder veränderbar. Insbesondere kann der Betrieb hinsichtlich der Wirtschaftlichkeit optimiert sein. Dabei wird auch der Verschleiß des Arbeitsgeräts 1 einbezogen.

## Patentansprüche

1. Verfahren zum Betrieb eines einen Betriebsmodus (B) aufweisenden landwirtschaftlichen Arbeitsgeräts (1), insbesondere eines Bodenbearbeitungsgeräts, mit einem Rahmen (3), mit mehreren an dem Rahmen (3) angeordneten Arbeitswerkzeugen (4), mit zumindest einer Erfassungseinrichtung (10) zur Erfassung von Betriebs- und/oder Umgebungsdaten, mit einer Steuereinheit (7), wobei das Verfahren die Einhaltung des Betriebsmodus (B) überwacht, **dadurch gekennzeichnet, dass** das Arbeitsgerät (1) in verschiedenen einstellbaren Betriebsmodi (B) betrieben werden kann und die Einhaltung eines eingestellten Betriebsmodus (B) des Arbeitsgeräts (1) durch eine Steuereinheit (7) überwacht wird.

2. Verfahren nach Anspruch 1, wobei während des Betriebs des einen Betriebsmodus (B) aufweisenden Arbeitsgeräts (1) mittels der zumindest einen Erfassungseinrichtung (10) Betriebs- und/oder Umgebungsdaten des Arbeitsgeräts (1) erfasst werden, welche durch die Steuereinheit (7) ausgewertet werden, **dadurch gekennzeichnet, dass** die Einhaltung des eingestellten Betriebsmodus (B) des Arbeitsgeräts (1) unter Berücksichtigung der erfassen Betriebs- und/oder Umgebungsdaten des Arbeitsgeräts (1) durch die Steuereinheit (7) überwacht wird.

3. Verfahren nach zumindest einem der vorangegangenen Ansprüche, **dadurch gekennzeichnet, dass** der Steuereinheit (7) eine Speichereinheit (8) zugeordnet ist und durch die Steuereinheit (7) aus der Speichereinheit (8) Informationen zu den verschiedenen Betriebsmodi (B) abgerufen werden können und die Informationen zu den verschiedenen Betriebsmodi (B) zumindest betriebsmodusspezifische Betriebsparameter des Arbeitsgeräts (1) umfassen.

4. Verfahren nach zumindest einem der vorangegangenen Ansprüche, wobei der Steuereinheit (8) eine Anzeige- und/oder Eingabeeinrichtung (9) zugeordnet ist, **dadurch gekennzeichnet, dass** bei festgestellter oder drohender Nicht-Einhaltung des eingestellten Betriebsmodus (B) des Arbeitsgeräts (1) dem Bediener entsprechende Informationen über die Anzeige- und/oder Eingabeeinrichtung (9) angezeigt werden.

5. Verfahren nach zumindest einem der vorangegangenen Ansprüche, **dadurch gekennzeichnet, dass** die bei festgestellter oder drohender Nicht-Einhaltung des eingestellten Betriebsmodus (B) des Arbeitsgeräts (1) die dem Bediener angezeigten Informationen Hinweise auf den Grund der Nicht-Einhaltung des eingestellten Betriebsmodus (B), insbesondere eine Empfehlung eines optimalen alternativ einstellbaren Betriebsmodus (B), umfassen.

6. Verfahren nach zumindest einem der vorangegangenen Ansprüche, **dadurch gekennzeichnet, dass** der Steuereinheit (7) durch den Bediener über die Anzeige- und/oder Eingabeeinrichtung (9) Informationen zugeführt werden können.

7. Landwirtschaftliches Arbeitsgerät (1), insbesondere Bodenbearbeitungsgerät, mit einem Rahmen (3), mit mehreren an dem Rahmen (3) angeordneten Arbeitswerkzeugen (4), mit zumindest einer Erfassungseinrichtung (10) zur Erfassung von Betriebs- und/oder Umgebungsdaten, mit einer Steuereinheit (7), welcher ein Anzeige- und/oder Eingabeeinrichtung (9) zugeordnet ist, **dadurch gekennzeichnet, dass** das Arbeitsgerät (1) in verschiedenen Betriebsmodi (B) betrieben werden kann, wobei ein Bediener über die Anzeige- und/oder Eingabeeinrichtung (9) einen Betriebsmodus (B) auswählen kann und dem Bediener Informationen zu dem aktuell ausgewählten Betriebsmodus (B) angezeigt werden können.

8. Arbeitsgerät (1) nach Anspruch 7, **dadurch gekennzeichnet, dass** der Steuereinheit (7) eine Speichereinheit (8) zugeordnet ist und in der Speichereinheit (8) Informationen zu den Betriebsmodi (B) hinterlegt sind und die Informationen zu den Betriebsmodi (B) zumindest betriebsmodusspezifische Betriebsparameter des Arbeitsgeräts (1) umfassen.

9. Arbeitsgerät (1) zumindest einem der Ansprüche 7 oder 8, wobei der Steuereinheit (7) zumindest eine Kommunikationseinrichtung zugeordnet ist und während des Betriebs des Arbeitsgeräts (1) mittels der zumindest einen Erfassungseinrichtung (10) Betriebs- und/oder Umgebungsdaten des Arbeitsgeräts (1) erfasst werden, welche durch die Steuereinheit (7) ausgewertet werden, **dadurch gekennzeichnet, dass** die Übermittlung der von der zumindest einen Erfassungseinrichtung (10) erfassten Betriebs- und/oder Umgebungsdaten an die Steuereinheit (7) und/oder die der Steuereinheit (7) zugeordneten Speichereinheit (8), insbesondere drahtlos, über die der Steuereinheit (7) zugeordneten zumindest einen Kommunikationseinrichtung erfolgt.

10. Arbeitsgerät (1) zumindest einem der Ansprüche 7 bis 9, **dadurch gekennzeichnet, dass** die mittels der zumindest einen Erfassungseinrichtung (10) erfassten Betriebs- und/oder Umgebungsdaten zumindest den Verschleiß der Arbeitswerkzeuge (4), die für den Betrieb des Arbeitsgeräts (1) notwendige Zugkraft und die momentane Vortriebsgeschwindigkeit des Arbeitsgeräts (1) umfassen.
